# EUROPÄISCHE PATENTSCHRIFT

(11) **EP 3 914 373 B1**
(45) Veröffentlichungstag und Bekanntmachung des Hinweises auf die Patenterteilung: **25.06.2025**
(21) Anmeldenummer: 20700261.9
(22) Anmeldetag: 08.01.2020
(51) Int. Cl.: B01D 53/78, B01D 47/14, B01D 53/18

(54) **ABLUFTWÄSCHER MIT INNENLIEGENDEM LUFTABZUG**
AIR SCRUBBER HAVING AN INTERIOR AIR EXHAUST
ÉPURATEUR D'AIR VICIÉ COMPRENANT UNE ASPIRATION D'AIR INTERNE

(30) Priorität: 21.01.2019 DE 102019200700
(43) Veröffentlichungstag der Anmeldung: 01.12.2021
(73) Patentinhaber: thyssenkrupp Uhde GmbH, 44141 Dortmund (DE); thyssenkrupp AG, 45143 Essen (DE)
(72) Erfinder: ERBEN, Axel, 44267 Dortmund (DE); PIEPER, Matthias, 59423 Unna (DE)
(74) Vertreter: thyssenkrupp Intellectual Property GmbH
(86) Internationale Anmeldenummer: PCT/EP2020/050274
(87) Internationale Veröffentlichungsnummer: WO 2020/151946

(56) Entgegenhaltungen:
- CN-B- 105 236 609
- CN-U- 203 725 013
- CN-U- 204 107 330
- DE-B1- 2 134 585
- GB-A- 1 528 051

## Beschreibung

Die vorliegende Erfindung betrifft Abluftwäscher insbesondere für Ammoniumnitrat-, Calcium-Ammoniumnitrat- oder LDAN-(Low Density Ammoniumnitrat-)Anlagen mit verbessertem Design.

Bei der Herstellung von Düngemitteln und anderen, stickstoffbasierten Produkten, insbesondere mit den Verfahren Granulation und Prillierung, werden große Mengen Luft zur Trocknung und Kühlung des Feststoffes eingesetzt. Der bei den mechanischen Prozessen entstehende Staub und Produktabrieb wird von dieser Prozessluft ausgetragen und muss in nachgeschalteten Prozessschritten wieder abgeschieden werden, um eine Belastung von Mensch und Umwelt sowie einen Produktverlust zu verhindern. Des Weiteren wird bei der Trocknung von Düngemitteln häufig auch Ammoniak freigesetzt. Dieses Gas muss ebenfalls aus der Abluft entfernt werden, bevor diese die Anlagengrenzen verlässt. Es hat sich herausgestellt, dass (bei ammoniumnitrathaltigen Produkten) eine saure Nasswäsche die effektivste Methode zur Abluftreinigung darstellt: der Staub wird von der Waschflüssigkeit benetzt; die wasserlöslichen Bestandteile (Ammoniumnitrat) gehen in Lösung, während die unlöslichen (zum Beispiel Zuschlagsstoffe wie Füllmaterial, Additive) suspendiert werden. Auch das Ammoniakgas wird in der Waschflüssigkeit gelöst und dann von der freien Säure zu einem Ammoniaksalz neutralisiert. Die so gewaschene Luft enthält nur noch geringe Beimengungen an Staub und Ammoniak. Wird als Ansäuerungsmittel Salpetersäure eingesetzt, entsteht aus dem ausgewaschenen Ammoniak Ammoniumnitrat, das als Wertstoff wieder in den Produktionsprozess zurückgeführt werden kann. Zur Vergrößerung der Kontaktfläche zwischen zu reinigender Prozessluft und Waschlösung wird eine Packung eingesetzt (üblicherweise eine lose Füllkörperpackung, da einfach zu installieren und weniger anfällig für Blockierungen durch Feststoffe). Die Aufgabe der Waschlösung wird durch Flüssigkeitsverteilersysteme oberhalb der Packung gewährleistet. Umwälzpumpen führen die Waschflüssigkeit aus dem Sumpf des Wäschers wieder zur Flüssigkeitsverteilung oberhalb der Packung zurück. Um den Mitriss von Tröpfchen der Waschflüssigkeit bis in den Abluftkanal hinein zu verhindern, wird üblicherweise ein Tropfenabscheider eingesetzt.

Es sind Anlagen zur Herstellung von AN/CAN/LDAN-Anlagen (Anlagen für die Herstellung von Ammoniumnitrat, Calcium-Ammoniumnitrat oder Ammoniumnitrat mit geringer Dichte) bekannt. Bei diesen Anlagen werden für die Reinigung staubbeladener und ammoniakhaltiger Abgase üblicherweise Nasswäscher mit Packungen eingesetzt. Diese Wäscher sind im Allgemeinen rund ausgeführt, mit Durchmessern bis über 6 m und ca. 20 m Höhe. Die Luftzuführung befindet sich unterhalb der Packung, die gereinigte Luft wird am Kopf des Wäschers abgezogen. Bei solchen Anlagen wird der jeweils nachgeschaltete Ventilator aus verschiedenen Gründen im Allgemeinen auf dem Boden installiert, so dass der Luftkanal außerhalb des Wäschers wieder auf den Boden geführt werden muss. Da diese Kanäle einen Durchmesser bis über 2000 mm aufweisen, müssen diese durch Stahlbau geschützt und die thermische Ausdehnung kompensiert werden. Dies ist aufwendig und teuer.

Entsprechende Anlagen, bei denen die Abluft oben aus dem Gehäuse geführt wird, sind z.B. aus JP 2012/187515 oder US 4,487,748 bekannt. Als Stand der Technik können zudem noch GB 794 060 A oder DE 10 2008 046 820 A1 genannt werden. Ferner wird auf folgende Patentliteratur verwiesen: CN 203725013 U, CN 204 107 330 U und CN 105 236 609 B.

Der Betrieb bzw. die Konstruktion solcher Anlagen steht allerdings vor mehreren Herausforderungen: Da große Mengen warmer, trockener Luft gewaschen werden und sich daher mit Wasser anreichern, muss ständig Wasser in den Wäscher nachgespeist werden. Die Konzentration der Waschlösung muss überwacht und limitiert werden, um eine Übersättigung der Lösung mit Ammoniumnitrat zu verhindern. Anderenfalls würde sich die Packung zusetzen, der Luftstrom behindert, Druckverlust und Strömungsgeschwindigkeit nehmen zu, die Reinigungsleistung des Wäschers nimmt ab. Da der abgeschiedene Staub auch waschflüssigkeitsunlösliche Bestandteile enthält, sammelt sich im Laufe des Betriebs Schlamm auf dem Boden des Wäschers an. Dieser Schlamm führt zu Schwierigkeiten bei den Umwälzpumpen und Abschlämmventilen. Der pH-Wert der Waschflüssigkeit muss kontinuierlich gemessen und durch Zugabe von Säure nachjustiert werden, um sowohl eine optimale Ammoniakabscheidung als auch einen materialschonenden Betrieb zu gewährleisten. Der Luftabzug an der Spitze der Waschkolonne verursacht bedingt durch die großen Rohrdurchmesser einen recht hohen Aufwand an Rohrleitungen und Rohrleitungshalterung. Die oft recht großen Durchmesser der Wäscher erfordern aufwändige Stützkonstruktionen für die Trageroste der Packung, die Packungsniederhalter und die Flüssigkeitsverteiler.

Aufgabe der vorliegenden Erfindung war es demgemäß, unter anderem, Wege zu finden, bestehende Anlagen, Abluftwäscher und Verfahren so zu verbessern, dass der apparative und monetäre Aufwand signifikant verringert werden und die weiteren betrieblichen Nachteile und Schwierigkeiten verringert werden können.

Gelöst wird die Aufgabe im Rahmen der vorliegenden Erfindung durch die Gegenstände der anhängenden Ansprüche, wobei die Unteransprüche bevorzugte Ausgestaltungen darstellen.

Weitere erfindungsgemäße und insbesondere auch bevorzugte Ausgestaltungen ergeben sich aus der nachfolgenden Beschreibung.

Die vorliegende Erfindung betrifft in einer Ausführungsform einen Abluftwäscher zur Entfernung von Staub, Produktabrieb und wasserlöslichen Bestandteilen aus Prozessabluft umfassend in einem Gehäuse mindestens eine Reinigungsstufe, mindestens eine Packung, optional mindestens einen Waschboden, mindestens eine Einlassvorrichtung für Prozessabluft, mindestens eine Abzugsvorrichtung für Waschlösung, mindestens eine Abzugsleitung für die gereinigte Abluft, mindestens eine Aufgabeleitung für Waschlösung im oberen Teil des Gehäuses.

Die erfindungsgemäßen Abluftwäscher zeichnen sich dadurch aus, dass die Abzugsleitung für die gereinigte Abluft
i) im Inneren des Gehäuses oberhalb der mindestens einen Reinigungsstufe beginnt,
ii) im Inneren des Gehäuses nach unten geführt wird und
iii) im unteren Bereich des Gehäuses, unterhalb der Reinigungsstufe(n) aus dem Gehäuse heraus nach außen geführt wird.

Die vorliegende Erfindung betrifft in einer weiteren Ausführungsform ein Verfahren zur Abluftreinigung bei der Herstellung oder in Anlagen zur Herstellung von ammoniumnitrat- oder harnstoffhaltigem prilliertem oder granuliertem Produkt, vorzugsweise Ammoniumnitrat-Düngemittel (HDAN), porösem Ammoniumnitrat (LDAN), Kalkammonsalpeter (CAN/KAS), Ammonnitrat-Sulfat-Düngemittel (ASN) oder Harnstoffdünger, dadurch gekennzeichnet, dass ein erfindungsgemäßer Abluftwäscher eingesetzt wird.

Die vorliegende Erfindung betrifft in noch einer weiteren Ausführungsform eine Anlage zur Herstellung von ammoniumnitrat- oder harnstoffhaltigem prilliertem oder granuliertem Produkt, vorzugsweise Ammoniumnitrat-Düngemittel (HDAN), porösem Ammoniumnitrat (LDAN), Kalkammonsalpeter (CAN/KAS), Ammonnitrat-Sulfat-Düngemittel (ASN) oder Harnstoffdünger, bei der mindestens ein erfindungsgemäßer Abluftwäscher umfasst ist.

Die vorliegende Erfindung betrifft in einer anderen Ausführungsform die Verwendung von erfindungsgemäßen Abluftwäschern zur Abgasreinigung bei der Herstellung von ammoniumnitrat- oder harnstoffhaltigem prilliertem oder granuliertem Produkt, vorzugsweise Ammoniumnitrat-Düngemittel (HDAN), porösem Ammoniumnitrat (LDAN), Kalkammonsalpeter (CAN/KAS), Ammonnitrat-Sulfat-Düngemittel (ASN) oder Harnstoffdünger.

In Ausführungsformen der vorliegenden Erfindung wird als Waschflüssigkeit eine wässrige Lösung eingesetzt. Diese kann in Ausführungsformen umlaufend vom Boden des Wäschers abgezogen und über der/den Waschstufe/n wieder aufgegeben werden.

Diese Lösung kann in Ausführungsformen gelöste oder suspendierte Stoffe, welche aus dem Luftstrom ausgewaschen oder in einer chemischen Reaktion aus ausgewaschenen Stoffen gebildet wurden, enthalten. Diese Stoffe können beispielsweise Ammoniumnitrat, Kalkstein, Harnstoff, Ammoniak, Salpetersäure oder Schwefelsäure sein. Um ein stoffliches Gleichgewicht herzustellen wird vorzugsweise kontinuierlich ein Teil der Waschlösung aus dem Umlauf abgezogen und das hierdurch und durch Wasserverdunstung entzogene Wasser durch Zugabe eines geeigneten wässrigen Zulaufs, vorzugsweise gereinigtes Wasser, Dampf- oder Prozesskondensat, hinzugegeben.

Bei den Abluftwäschern der vorliegenden Erfindung wird der gereinigte Luftstrom bereits innerhalb des Wäschers nach unten geleitet und tritt unterhalb der Packungen aus dem Gehäuse aus, bevorzugt ungefähr in Höhe des Ventilatorzulaufs, über den die gereinigte Abluft aus dem Gehäuse abgeführt wird.

Der notwendige Wäscherdurchmesser ändert sich durch das erfindungsgemäße Design kaum. Zudem wird die Verteilung des Waschwassers auf die Packungen durch die Ringgeometrie einfacher. Außerdem verringern sich Aufwand und benötigte Zeit für die Montage und Vormontage des Systems.

Als Packungen eignen sich dabei insbesondere Füllkörperpackungen, jedoch auch im Prinzip beliebig andere dem Fachmann geläufiger Packungen. Ein Beispiel für im Rahmen der vorliegenden Erfindung einsetzbare Packungen sind übliche Füllkörper oder strukturierte Packungen, vorzugsweise komplex geformte Kunststoff-Füllkörper wie z.B. solche, die unter den Markennamen Snowflakes^{®}, Tellerette^{®} oder Q-Pac^{®} vertrieben werden.

In weiteren Ausgestaltungsformen der vorliegenden Erfindung können in den erfindungsgemäßen Abluftwäscher zwischen Packung und Tropfenabscheider Waschböden eingezogen werden, um den Abscheidegrad noch weiter zu erhöhen. Als Waschböden können dabei im Rahmen der vorliegenden Erfindung übliche dem Fachmann geläufige Waschböden verwendet werden, z.B. Glocken-, Ventil- oder Tunnelböden.

Ein wesentlicher Aspekt der vorliegenden Erfindung ist die innenliegende Luftaustrittsleitung in dem Abluftwäscher.

Vorteile der vorliegenden Erfindung sind dabei unter anderem kompaktes Design, ein kleineres Grundmaß für die Aufstellung, Ersparnisse für externen Luftkanal und gegebenenfalls Stahlbau, Ersparnisse bei der Montage des Luftkanals etc.

Diese Vorteile bedeuten, dass mit der vorliegenden Erfindung finanzielle Einsparungen realisiert werden können. Zudem sind die Anlagen durch die erfindungsgemäßen Abluftwäscher in ihrem apparativen Aufwand deutlich geringer und mithin vorteilhafter als es bisherige Anlagen waren.

Sofern die Abluft aus dem Wäscher der vorliegenden Erfindung mit mehr als einem Ventilator abgezogen werden soll, kann der Luftaustrittskanal bereits innerhalb des Wäschers geteilt und durch mehrere Gehäusedurchtritte zu den Ventilatoren geführt werden. Hierdurch werden weitere Kosten im Vergleich zu einer üblichen externen Luftstromteilung beiden gespart.

Dadurch, dass der gereinigte Abluftstrom nicht axial an der Spitze der Waschkolonne außen abgezogen und durch eine externe Rohrleitung zum Wäschergebläse geführt wird, sondern im Inneren des Wäschers zurück nach unten geleitet und seitlich austretend gebaut ist, ergeben sich mehrere Vorteile:
- die Masse an verbautem Rohrleitungsmaterial und zugehörigen Unterstützungen (Bilanzraum zwischen Wäscher und Wäschergebläse) sinkt deutlich,
- der Montageaufwand bei der Installation reduziert sich signifikant,
- das innenliegende Rohr kann zugleich als Anschlagspunkt für die (vielen) internen Träger zur Fixierung der Packung und der Flüssigkeitsverteilsysteme dienen.

In bevorzugten Ausführungsformen der vorliegenden Erfindung ist der erfindungsgemäße Abluftwäscher so ausgestaltet, dass er im unteren Teil kegelförmig ist, mit der Spitze nach unten; dadurch entsteht ein kegelförmiger Sumpf des Wäschers mit im Zentrum liegendem Ablauf zu den Umwälzpumpen. Dadurch wird ein sehr gleichmäßiger Schlammabzug ermöglicht.

Durch eine tangentiale Eindüsung eines Teilstroms der zirkulierten Waschlösung in den kegelförmigen Sumpf ist es möglich, die Ablagerung von Feststoffen noch weiter zu verringern. Dieser Strom eignet sich auch hervorragend zur Beurteilung der Eigenschaften der Waschlösung, wie beispielsweise Temperatur, Dichte, Konzentration, pH, da aufgrund des geringen Volumenstroms nur Messgeräte mit kleinem Rohrquerschnitt benötigt werden. Aus diesem Grunde sind eine entsprechende tangentiale Eindüsung bzw. ein Abluftwäscher mit einer Vorrichtung zum tangentialen Eindüsen bevorzugte Ausgestaltungen.

Im Rahmen der vorliegenden Erfindung ist es darüber hinaus in weiteren Ausführungsformen möglich, den erfindungsgemäßen Abluftwäscher so auszugestalten, dass er eine oder mehrere Reinigungsstufen enthalten kann, die mit gleichen oder verschiedenen Einsätzen und gleichen oder verschiedenen Prozessbedingungen betrieben werden können.

Es mit der vorliegenden Erfindung weiterhin möglich, die Wasserverdunstungsleistung des Wäschers weiter zu erhöhen, um geeignete überschüssige Prozessabwässer auf vergleichsweise günstige Weise aus einem Anlagenkomplex zu entfernen. Dies geschieht bevorzugt durch Aufheizung der umlaufenden Waschlösung in einem externen Wärmeaustauscher, der z.B. durch niederkalorische Prozessmedien beheizt werden kann und welche anderenfalls sogar mit Kühlwasser gekühlt werden können. Ein beispielhafter Anwendungsfall ist die Kondensation von Prozessbrüden aus einer vorgeschalteten Ammoniumnitrateindampfung durch Einsatz der umlaufenden Waschlösung als Kühlmedium. Der Energieeintrag wird von der Waschlösung an die Wäscherluft übertragen und verursacht einen Temperaturanstieg der gereinigten Luft, die dadurch eine höhere Wasserbeladung mit sich führt.

In weiteren Ausführungsformen der vorliegenden Erfindung können in Strömungsrichtung vor dem Tropfenabscheider Düsen angebracht werden, mit denen Wasser oder andere Stoffe, wie insbesondere Säure, auf den Abscheider gesprüht werden können. Eine eventuelle Anreicherung von ammoniumnitrathaltigen Feststoffbelägen lässt sich so leicht wieder abreinigen, da Ammoniumnitrat und Harnstoff sehr gut in Wasser löslich sind. Nicht wasserlösliche Beläge können durch Zugabe von Säure (zum Beispiel Salpetersäure) gelöst werden.

In weiteren Ausführungsformen der vorliegenden Erfindung kann ein Wärmetauscherpaket in den innenliegenden Luftabzugskanal eingesetzt werden. Hierzu kann der Kanal in Größe und Form verändert werden, um das Wärmetauscherpaket z.B. aus Rohren Wärmetauscherplatten oder Spiralrohren in einer strömungsgünstigen Weise aufnehmen zu können. Eine so nach der Wasseraufnahme im Wäscher erwärmte Luft hat eine reduzierte relative Luftfeuchtigkeit und führt daher zu einer witterungsabhängig geringen Sichtbarkeit der Wasserdampffahne aus dem Abluftkamin. Eine hierin weiter abgekühlte Luft enthält eine absolut geringere Wasserbeladung und kann für einen nachfolgenden Einsatz ohne einen weiteren externen Luftkühler eingesetzt werden.

In weiteren Ausführungsformen der vorliegenden Erfindung kann der erfindungsgemäße Abluftwäscher mehrstufig ausgeführt werden, wobei jede der einzelnen Waschstufen mit eigenen Waschflüssigkeiten, Zusätzen und Bedingungen wie beispielsweise pH-Wert, Konzentration oder Temperatur gefahren werden kann.

Weiterhin ist es möglich, mehrere erfindungsgemäße Abluftwäscher in einer Anlage zu verbauen; beispielsweise können mehrere erfindungsgemäße Abluftwäscher in Reihe oder parallel geschaltet bzw. angeordnet sein.

Es ist im Rahmen der vorliegenden Erfindung bevorzugt, wenn der Abluftwäscher eine kreisförmige Fläche hat und die Luftabsaugvorrichtung, das heißt die oberhalb der mindestens einen Reinigungsstufe beginnende Abzugsleitung für die gereinigte Abluft, zentral mittig, insbesondere konzentrisch, angeordnet ist.

In weiteren bevorzugten Ausgestaltungsformen der vorliegenden Erfindung ist die Luftabsaugvorrichtung ein Rohr oder ein Rohrbündel.

In besonderen Ausführungsformen kann die in Strömungsrichtung der Luft erste Waschstufe mit neutralem oder alkalischen pH-Wert betrieben werden, um Staub aus der Abluft zu waschen, ohne den Staub chemisch zu verändern (etwa durch einen Angriff durch Säure, der zur Bildung unerwünschter/nachteiliger Nebenprodukte führen kann). In der zweiten Stufe kann daraufhin zum Beispiel eine saure Wäsche der zuvor entstaubten Luft folgen, um Gase auszuwaschen. Die Abschlämmung der zweiten Stufe kann dabei in Varianten der vorliegenden Erfindung als Aufgabeflüssigkeit für die erste Stufe genutzt werden.

Im Rahmen der vorliegenden Erfindung wird die verunreinigte Prozessabluft demgemäß zuerst durch eine Packung geführt, dann optional durch einen Waschboden, und dann an einem Tropfenabscheider vorbei, bevor sie in die Abzugsleitung für die gereinigte Abluft eintritt.

Gegenstand der vorliegenden Erfindung sind unter anderem auch die folgenden mit römischen Ziffern bezeichneten Ausführungsformen:
Ausführungsform I Abluftwäscher zur Entfernung von Staub, Produktabrieb und wasserlöslichen Bestandteilen aus Prozessabluft umfassend in einem Gehäuse
   I) mindestens eine Reinigungsstufe umfassend
      a) einen Tropfenabscheider, bevorzugt ausgestaltet als Drahtgestrick- oder Lamellenabscheider
      b) unterhalb davon mindestens eine Packung, bevorzugt ausgestaltet als Füllkörperpackung,
      c) optional zwischen Tropfenabscheider und Packung mindestens ein Waschboden,
   II) mindestens eine Einlassvorrichtung für Prozessabluft, angeordnet im unteren Teil des Gehäuses, bevorzugt unterhalb der mindestens einen Reinigungsstufe,
   III) mindestens eine Abzugsvorrichtung für Waschlösung, welche auch Feststoffe enthalten kann, bevorzugt am unteren Ende des Gehäuses,
   IV) mindestens eine Abzugsleitung für die gereinigte Abluft
   V) mindestens eine Aufgabeleitung für Waschlösung im oberen Teil des Gehäuses, oberhalb der mindestens einen Reinigungsstufe.
      dadurch gekennzeichnet, dass
      - die Abzugsleitung für die gereinigte Abluft
         i) im Inneren des Gehäuses oberhalb der mindestens einen Reinigungsstufe beginnt,
         ii) im Inneren des Gehäuses nach unten geführt wird und
         iii) im unteren Bereich des Gehäuses, unterhalb der Reinigungsstufe(n) aus dem Gehäuse heraus nach außen geführt wird.
Ausführungsform II Abluftwäscher nach Ausführungsform I, dadurch gekennzeichnet, dass
   - das Gehäuse am unteren Ende nach unten hin verjüngend ausgestaltet ist, bevorzugt konisch, und
   - die mindestens eine Abzugsvorrichtung für Waschlösung am unteren Ende des Gehäuses angeordnet ist.
Ausführungsform IIIa Abluftwäscher nach Ausführungsform II, dadurch gekennzeichnet, dass das untere sich verjüngende Ende als mit Waschflüssigkeit zumindest teilweise gefüllter Sumpf verwendet wird, oder dass die Waschflüssigkeit alternativ unterhalb des Wäschers in einem separaten Behälter aufgefangen und vorgehalten wird.
Ausführungsform IIIb Abluftwäscher nach Ausführungsform II, dadurch gekennzeichnet, dass die mindestens eine Abzugsvorrichtung für Waschlösung am tiefsten Punkt im Zentrum der Gehauseverjüngung angeordnet ist und optional mit mindestens einer Umwälzpumpe für den Waschlösungsabzug verbunden ist.
Ausführungsform IV Abluftwäscher nach einer der vorhergehenden Ausführungsformen, dadurch gekennzeichnet, dass die Abzugsleitung in der Mitte des Gehäuses, bevorzugt konzentrisch zu kreisförmigen Seitenwänden des Gehäuses, angeordnet ist.
Ausführungsform V Abluftwäscher nach einer der vorhergehenden Ausführungsformen, dadurch gekennzeichnet, dass die Abzugsleitung für die gereinigte Abluft im unteren Teil des Gehäuses, unterhalb der Reinigungsstufe(n) seitlich aus dem Gehäuse heraus nach außen geführt wird
Ausführungsform VI Abluftwäscher nach einer der vorhergehenden Ausführungsformen, dadurch gekennzeichnet, dass die im Inneren des Gehäuses liegende Abzugsleitung zugleich als Anschlagpunkt für interne Anbauten ausgestaltet ist, bevorzugt einschließlich Anschlagpunkt für die Elemente der Reinigungsstufe(n).
Ausführungsform VII Abluftwäscher nach einer der vorhergehenden Ausführungsformen, dadurch gekennzeichnet, dass die im Inneren des Gehäuses liegende Abzugsleitung, optional über Zusatzleitungen, mit mindestens einer Absaugvorrichtung und/oder mindestens einem Abluftgebläse verbunden ist.
Ausführungsform VIII Abluftwäscher nach einer der vorhergehenden Ausführungsformen, dadurch gekennzeichnet, dass ein Teil der unten abgezogenen Waschlösung oder ein anderweitiges geeignetes Prozessmedium, wie beispielsweise das Aufgabewasser oder an anderer Stelle angefallenes Prozesskondensat, in den konisch ausgestalteten unteren Teil des Gehäuses eingedüst wird, bevorzugt tangential.
Ausführungsform IX Abluftwäscher nach einer der vorhergehenden Ausführungsformen, dadurch gekennzeichnet, dass außerhalb des Gehäuses eine Vorrichtung für die Erwärmung der in das Gehäuse einzuleitenden Waschlösung angeordnet ist, bevorzugt in Form eines an der Zuleitung für die Waschlösung angeordneten Wärmetauschers.
Ausführungsform X Abluftwäscher nach einer der vorhergehenden Ausführungsformen, dadurch gekennzeichnet, dass eine Vorrichtung zur Messung physikalischer Parameter von sich im unteren Teil des Gehäuses ansammelndem Material umfasst ist, bevorzugt umfassend Vorrichtungen zur Messung von pH-Wert und Konzentration der Waschlösung und des Füllstandes im Abluftwäscher.
Ausführungsform XI Abluftwäscher nach einer der vorhergehenden Ausführungsformen, dadurch gekennzeichnet, dass eine Regelvorrichtung umfasst ist, mit der die Zuführmenge von Prozessabluft geregelt wird, bevorzugt über eine pegel- und konzentrationsgeregelte Nachspeisung.
Ausführungsform XII Abluftwäscher nach einer der vorhergehenden Ausführungsformen, dadurch gekennzeichnet, dass in Strömungsrichtung vor dem Tropfenabscheider Düsen angebracht sind, die zum Aufsprühen von Wasser auf den Tropfenabscheider konfiguriert sind.
Ausführungsform XIII Abluftwäscher nach einer der vorhergehenden Ausführungsformen, dadurch gekennzeichnet, dass in Strömungsrichtung nach der obersten Reinigungsstufe mindestens ein Wärmetauscher oder Wärmetauscherpaket installiert ist.
Ausführungsform XIV Abluftwäscher nach einer der vorhergehenden Ausführungsformen, dadurch gekennzeichnet, dass eine manuell oder automatisch geregelte Gas- oder Luftzufuhreinrichtung, bevorzugt geregelt basierend auf Temperatur-, Witterungs-, visuellen Parametern, in Strömungsrichtung nach der obersten Reinigungsstufe angeordnet ist, bevorzugt konfiguriert zur Einleitung von Gas oder Luft in die innenliegende Abluftleitung bzw. den innenliegenden Teil der Abluftleitung.
Ausführungsform XV Abluftwäscher nach einer der vorhergehenden Ausführungsformen, dadurch gekennzeichnet, dass im Falle mehrerer Reinigungsstufen für die einzelnen Reinigungsstufen
   A) jede Reinigungsstufe über eigene, unabhängige Zufuhr- und Regelungsvorrichtungen für die in der Reinigungsstufe anzuwendenden Waschflüssigkeiten, Zusätze und/oder Betriebsparameter aufweist,
      oder
   B) einige, jedoch nicht alle Reinigungsstufen über gemeinsame Zufuhr- und Regelungsvorrichtungen für die in der Reinigungsstufe anzuwendenden Waschflüssigkeiten, Zusätze und/oder Betriebsparameter aufweist,
      oder
   C) alle Reinigungsstufen über gemeinsame Zufuhr- und Regelungsvorrichtungen für die in den Reinigungsstufen anzuwendenden Waschflüssigkeiten, Zusätze und/oder Betriebsparameter aufweisen.
Ausführungsform XVI Abluftwäscher nach einer der vorhergehenden Ausführungsformen, dadurch gekennzeichnet, dass zwei Reinigungsstufen nacheinander angeordnet sind, wobei
   1) die in Strömungsrichtung der Luft erste Reinigungsstufe für alkalischen und neutralen, vorzugsweise ungeregelten pH-Wert-Betrieb konfiguriert ist
      und
   2) die zweite Reinigungsstufe für sauren pH-Wert-Betrieb konfiguriert ist.
Ausführungsform XVII Abluftwäscher nach einer der vorhergehenden Ausführungsformen, dadurch gekennzeichnet, dass die unten abgezogene Waschlösung ganz oder teilweise zur Aufgabestelle im oberen Teil des Gehäuses geleitet wird, vorzugsweise mittels einer Pumpe.
Ausführungsform XVIII Abluftwäscher nach einer der vorhergehenden Ausführungsformen, dadurch gekennzeichnet, dass eine weitere Reinigungsstufe von mindestens einem Teilstrom der zuvor vorgereinigten Luft durchströmt wird.
Ausführungsform XIX Abluftwäscher nach einer der vorhergehenden Ausführungsformen, dadurch gekennzeichnet, dass mindestens eine Reinigungsstufe durch Zugabe einer Mineralsäure, bevorzug Salpeter- oder Schwefelsäure, in ihrem pH-Wert eingestellt werden kann.
Ausführungsform XX Abluftwäscher nach einer der vorhergehenden Ausführungsformen, dadurch gekennzeichnet, dass er als Teil einer Anlage zur Herstellung von ammoniumnitrat- oder harnstoffhaltigem prilliertem oder granuliertem Produkt, vorzugsweise Ammoniumnitrat-Düngemittel (HDAN), porösem Ammoniumnitrat (LDAN), Kalkammonsalpeter (CAN/KAS), Ammonnitrat-Sulfat-Düngemittel (ASN) oder Harnstoffdünger konfiguriert ist.
Ausführungsform XXI Verfahren zur Abluftreinigung bei der Herstellung oder in Anlagen zur Herstellung von ammoniumnitrat- oder harnstoffhaltigem prilliertem oder granuliertem Produkt, vorzugsweise Ammoniumnitrat-Düngemittel (HDAN), porösem Ammoniumnitrat (LDAN), Kalkammonsalpeter (CAN/KAS), Ammonnitrat-Sulfat-Düngemittel (ASN) oder Harnstoffdünger, dadurch gekennzeichnet, dass ein Abluftwäscher gemäß einer der Ausführungsformen I bis XX eingesetzt wird.
Ausführungsform XXII Anlage zur Herstellung von ammoniumnitrat- oder harnstoffhaltigem prilliertem oder granuliertem Produkt, vorzugsweise Ammoniumnitrat-Düngemittel (HDAN), porösem Ammoniumnitrat (LDAN), Kalkammonsalpeter (CAN/KAS), Ammonnitrat-Sulfat-Düngemittel (ASN) oder Harnstoffdünger, dadurch gekennzeichnet, dass die Anlage einen Abluftwäscher gemäß einer der Ausführungsformen I bis XX umfasst.
Ausführungsform XXIII Verwendung eines Abluftwäschers gemäß einer der Ausführungsformen I bis XX zur Abgasreinigung bei der Herstellung von ammoniumnitrat- oder harnstoffhaltigem prilliertem oder granuliertem Produkt, vorzugsweise Ammoniumnitrat-Düngemittel (HDAN), porösem Ammoniumnitrat (LDAN), Kalkammonsalpeter (CAN/KAS), Ammonnitrat-Sulfat-Düngemittel (ASN) oder Harnstoffdünger.

Die verschiedenen Ausgestaltungen, Ausführungsformen und Varianten der vorliegenden Erfindung, beispielsweise, aber nicht auf diese beschränkt, der verschiedenen Ansprüche, können dabei beliebig miteinander kombiniert werden, sofern solche Kombinationen sich nicht widersprechen.

Die vorliegende Erfindung wird im Folgenden mit Bezugnahme auf die Zeichnung näher erläutert. Die Zeichnung ist dabei nicht limitierend auszulegen und nicht maßstabsgetreu. Weiterhin enthält die Zeichnung nicht alle Merkmale, die übliche Anlagen aufweisen, sondern ist auf die für die vorliegende Erfindung und ihr Verständnis wesentlichen Merkmale reduziert.

### Figurenbeschreibung:

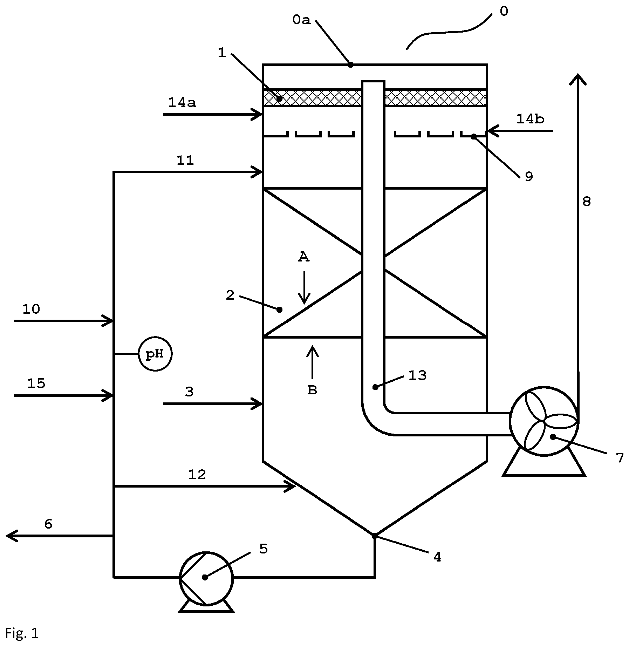

Figur 1 zeigt einen erfindungsgemäßen Abluftwäscher.

Die zu reinigende Prozessabluft 3 wird über eine Zuleitung in das Gehäuse 0a des Abluftwäschers 0 geleitet. Gleichzeitig wird über das Abluftgebläse 7 an einer anderen Stelle des Abluftwäschers 0 die gereinigte Abluft abgezogen. Durch die so erzeugte Druckdifferenz wird die in den Abluftwäscher 0 eingeführte Prozessabluft 3 durch die Packung 2 bzw. Packungen, einen gegebenenfalls vorhandenen, hier in der Zeichnung dargestellten, Waschboden 9 und über einen Tropfenabscheider 1 in den oberen Bereich des Abluftwäschers 0 gefördert. Dabei wird die Prozessabluft 3 durch einen Gegenstrom einer wässrigen Waschlösung gereinigt. Die so gereinigte Prozessabluft tritt dann im oberen Bereich des Abluftwäschers 0 in die zentral angeordnete Abzugsleitung 13, die bevorzugt als Rohr ausgestaltet ist, für die Abluft 8 ein und wird über das Abluftgebläse 7 aus dem Abluftwäscher 0 herausgefördert und als gereinigte Abluft ausgeleitet. Die Förderung der Luft kann alternativ auch über ein dem Abluftwäscher 0 vorgeschaltetes Gebläse erfolgen. Die Waschlösung 11, die bevorzugt eine wässrige Lösung der ausgewaschenen Stoffe sein kann, und welche oberhalb der Waschstufe 2 im oberen Bereich des Abluftwäschers 0 eingeleitet wird, fließt dabei der Gravitation gehorchend im Gegenstrom zu der zu reinigenden Prozessabluft 3 durch den Waschboden 9 und die Packung 3 nach unten in den unteren Bereich des Abluftwäschers 0. Die Zuführung der Waschlösung 11 in den Wäscher geschieht beispielsweise durch übliche Flüssigkeitsverteiler, beispielsweise Rohr- oder Trogverteiler. Die Figur zeigt dabei eine bevorzugte Ausgestaltung der vorliegenden Erfindung, in welcher der untere Bereich des Abluftwäschers 0 hier konisch dargestellt ist, was jedoch nicht zwingend notwendig ist für die vorliegende Erfindung. Auch kann die Waschstufe 2 aus mehreren Waschstufen mit jeweils zugeordneten Waschwasserumläufen bestehen. Am unteren Ende des Abluftwäschers 0, in der Zeichnung an der Spitze des konischen Teils befindet sich eine Abzugsvorrichtung 4 für die Waschlösung. Dabei wird die Waschlösung über die Umwälzpumpe 5 aus dem unteren Bereich des Abluftwäschers 0 abgezogen und wieder in den oberen Teil des Abluftwäschers 0 zurückgeführt. Abweichend von Figur 1 kann die Waschlösung auch vom Boden des Wäschers in einen separaten Behälter fließen und von dort der Umwälzpumpe 5 zugeführt werden. In der Figur 1 ist eine Wiedereinleitung der zugeführten, umgewälzten Waschlösung 11 zwischen der Packung 2 und dem Waschboden 9 dargestellt, allerdings ist es ebenso möglich die umgewälzte Waschlösung innerhalb des Packungsbereichs einzuführen. Gleichsam ist in der Figur vereinfachend dargestellt, dass die umgewälzte Waschlösung 11 an einer Stelle in den Abluftwäscher 0 zurück geführt wird; es ist jedoch ebenfalls möglich und von der vorliegenden Erfindung umfasst, dass die Waschlösung an mehreren Stellen in das Gehäuse 0a des Abluftwäschers 0 geführt werden kann. Weiterhin ist in der Zeichnung dargestellt, dass die am unteren Ende aus dem Abluftwäscher 0 abgezogene Waschflüssigkeit über eine Abschlämmung 6 von sich ansammelnden Verunreinigungen gereinigt werden kann. Im Rahmen der vorliegenden Erfindung erfolgt diese Abschlämmung bzw. Reinigung der Waschflüssigkeit abhängig von dem Grad der Verunreinigung der Waschflüssigkeit, demgemäß also auch in Abhängigkeit von dem Verunreinigungsgrad der zugeführten Prozessabluft 3. In der Zeichnung ist eine Zugabe von Aufgabewasser 10 dargestellt, welcher der umgepumpten Waschlösung 11 zugeführt wird. Diese Wasseraufgabe kann auch an anderer Stelle geschehen, beispielsweise direkt in den Wäscher oder vor die Umwälzpumpe 5. In der Figur sind Wasserzugaben 14a für die Spülung des Tropfenabscheiders 1 und 14b für einen optional verwendeten Waschboden gezeigt. Diese Wasserzugaben können dieselbe Herkunft wie das Aufgabewasser 10 besitzen, aber auch aus verschiedenen anderen Systemen stammen. In der Zeichnung ist mit Strom 12 beispielhaft ein bevorzugt tangential in den sich verjüngenden unteren Wäscherteil eingeleiteter Waschlösungsstrom gezeigt. Für diesen Strom 12 kann aber auch ein anderes Medium verwendet werden, wie beispielsweise das Aufgabewasser 10. In der Zeichnung ist mit Strom 15 die Zugabe einer Mineralsäure zum Fangen von Ammoniak aus der zu reinigenden Luft 3 dargestellt. Diese Zugabe kann beispielsweise auch vor der Umwälzpumpe 5 oder direkt in den Abluftwäscher 0 erfolgen. Die Messung des für die Regelung notwendigen pH-Wertes kann in Strömungsrichtung vor oder nach der Säurezugabe erfolgen. In der Zeichnung ist der im Inneren des Gehäuses 0a liegende Teil 13 der Abzugsleitung für die Abluft 8 mittig zentral in dem Gehäuse 0a der des Abluftwäschers 0 angeordnet dargestellt, und der Austritt der Abzugsleitung für die Abluft 8 aus dem Gehäuse 0a gegenüber des Eintritts der Prozessabluft 3 in das Gehäuse 0a des Abluftwäschers 0 auf etwa der gleichen Höhe des Gehäuses 0a dargestellt. Dies stellt eine bevorzugte Ausführungsform der vorliegenden Erfindung dar. Es ist nicht zwingend notwendig, dass der im Inneren des Gehäuses 0a liegende Teil 13 der Abzugsleitung für die Abluft 8 genau in der Mitte des Abluftwäschers 0 angeordnet ist, obwohl dies vorteilhaft ist. Ebenso ist es im Rahmen der vorliegenden Erfindung möglich, dass die Abzugsleitung für die Abluft 8 an anderer Stelle aus dem Gehäuse 0a austritt.

Es ist zu berücksichtigen, dass die Zeichnung nicht maßstabsgetreu ist und überdies eine vereinfachende Darstellung ist. Übliche, für das Verständnis der vorliegenden Erfindung nicht notwendige und dem Fachmann geläufige apparative Details bzw. Notwendigkeiten sind ausgelassen worden (wie beispielsweise Schrauben, Ventile oder Ähnliches).

### Bezugszeichenliste:

- 0: Abluftwäscher
- 0a: Gehäuse
- 1: Tropfenabscheider
- 2: Packung
- 3: zu reinigende Prozessluft
- 4: Abzugsvorrichtung (für Waschlösung)
- 5: Umwälzpumpe
- 6: Abschlämmung
- 7: Abluftgebläse
- 8: Abzugsleitung (für gereinigte Abluft)
- 9: Waschboden
- 10: Wasserzugabe (z.B. Wasser, Prozesskondensat, verdünnte Prozesslösung)
- 11: umlaufende Waschlösung
- 12: eingedüste Waschlösung
- 13: innenliegender Teil der Luftabzugsleitung
- 14 a,b: Wasserzugabe zu Tropfenabscheider/Waschboden
- 15: Mineralsäure (z.B. Salpetersäure, Schwefelsäure)
- A: Flussrichtung der Waschlösung
- B: Flussrichtung der Luft

## Patentansprüche

1. Abluftwäscher (0) zur Entfernung von Staub, Produktabrieb und wasserlöslichen Bestandteilen aus Prozessabluft umfassend in einem Gehäuse (0a)
I) mindestens eine Reinigungsstufe umfassend
a) einen Tropfenabscheider (1), bevorzugt ausgestaltet als Drahtgestrick- oder Lamellenabscheider
b) unterhalb davon mindestens eine Packung (2), bevorzugt ausgestaltet als Füllkörperpackung,
c) optional zwischen Tropfenabscheider (1) und Packung (2) mindestens ein Waschboden (9),
II) mindestens eine Einlassvorrichtung für Prozessabluft (3), angeordnet im unteren Teil des Gehäuses, bevorzugt unterhalb der mindestens einen Reinigungsstufe,
III) mindestens eine Abzugsvorrichtung für Waschlösung (4), welche auch Feststoffe enthalten kann, bevorzugt am unteren Ende des Gehäuses (0a),
IV) mindestens eine Abzugsleitung (8,13) für die gereinigte Abluft
V) mindestens eine Aufgabeleitung (11) für Waschlösung im oberen Teil des Gehäuses, oberhalb der mindestens einen Reinigungsstufe.
**dadurch gekennzeichnet, dass**
- die Abzugsleitung (8,13) für die gereinigte Abluft
i) im Inneren des Gehäuses (0a) oberhalb der mindestens einen Reinigungsstufe beginnt,
ii) im Inneren des Gehäuses (0a) nach unten geführt wird und
iii) im unteren Bereich des Gehäuses (0a), unterhalb der Reinigungsstufe(n) aus dem Gehäuse heraus nach außen geführt wird.

2. Abluftwäscher (0) nach Anspruch 1, **dadurch gekennzeichnet, dass**
- das Gehäuse (0a) am unteren Ende nach unten hin verjüngend ausgestaltet ist, bevorzugt konisch, und
- die mindestens eine Abzugsvorrichtung für Waschlösung (4) am unteren Ende des Gehäuses (0a) angeordnet ist.

3. Abluftwäscher (0) nach Anspruch 2, **dadurch gekennzeichnet, dass** die mindestens eine Abzugsvorrichtung für Waschlösung (4) am tiefsten Punkt im Zentrum der Gehauseverjüngung angeordnet ist und optional mit mindestens einer Umwälzpumpe für den Waschlösungsabzug verbunden ist.

4. Abluftwäscher (0) nach einem der vorhergehenden Ansprüche, **dadurch gekennzeichnet, dass** die Abzugsleitung (8) in der Mitte des Gehäuses (0a), bevorzugt konzentrisch zu kreisförmigen Seitenwänden des Gehäuses (0a), angeordnet ist.

5. Abluftwäscher (0) nach einem der vorhergehenden Ansprüche, **dadurch gekennzeichnet, dass** die Abzugsleitung (8) für die gereinigte Abluft im unteren Teil des Gehäuses (0a), unterhalb der Reinigungsstufe(n) seitlich aus dem Gehäuse heraus nach außen geführt wird

6. Abluftwäscher (0) nach einem der vorhergehenden Ansprüche, **dadurch gekennzeichnet, dass** die im Inneren des Gehäuses liegende Abzugsleitung (8) zugleich als Anschlagpunkt für interne Anbauten ausgestaltet ist, bevorzugt einschließlich Anschlagpunkt für die Elemente der Reinigungsstufe(n).

7. Abluftwäscher (0) nach einem der vorhergehenden Ansprüche, **dadurch gekennzeichnet, dass** die im Inneren des Gehäuses liegende Abzugsleitung (8), optional über Zusatzleitungen, mit mindestens einer Absaugvorrichtung und/oder mindestens einem Abluftgebläse verbunden ist.

8. Abluftwäscher (0) nach einem der vorhergehenden Ansprüche, **dadurch gekennzeichnet, dass** ein Teil der unten abgezogenen Waschlösung oder ein anderweitiges geeignetes Prozessmedium, wie beispielsweise das Aufgabewasser oder an anderer Stelle angefallenes Prozesskondensat, in den konisch ausgestalteten unteren Teil des Gehäuses (0a) eingedüst wird, bevorzugt tangential.

9. Abluftwäscher (0) nach einem der vorhergehenden Ansprüche, **dadurch gekennzeichnet, dass** eine Vorrichtung zur Messung physikalischer Parameter von sich im unteren Teil des Gehäuses (0a) ansammelndem Material umfasst ist, bevorzugt umfassend Vorrichtungen zur Messung von pH-Wert und Konzentration der Waschlösung und des Füllstandes im Abluftwäscher.

10. Abluftwäscher (0) nach einem der vorhergehenden Ansprüche, **dadurch gekennzeichnet, dass** in Strömungsrichtung vor dem Tropfenabscheider (1) Düsen angebracht sind, die zum Aufsprühen von Wasser auf den Tropfenabscheider (1) konfiguriert sind.

11. Abluftwäscher (0) nach einem der vorhergehenden Ansprüche, **dadurch gekennzeichnet, dass** in Strömungsrichtung nach der obersten Reinigungsstufe mindestens ein Wärmetauscher oder Wärmetauscherpaket installiert ist, vorzugsweise in dem innenliegenden Teil (13) der Luftabzugsleitung (8).

12. Abluftwäscher (0) nach einem der vorhergehenden Ansprüche, **dadurch gekennzeichnet, dass** eine manuell oder automatisch geregelte Gas- oder Luftzufuhreinrichtung, bevorzugt geregelt basierend auf Temperatur-, Witterungs-, visuellen Parametern, in Strömungsrichtung nach der obersten Reinigungsstufe angeordnet ist, bevorzugt konfiguriert zur Einleitung von Gas oder Luft in den innenliegende Teil (13) der Abluftleitung (8).

13. Abluftwäscher (0) nach einem der vorhergehenden Ansprüche, **dadurch gekennzeichnet, dass** im Falle mehrerer Reinigungsstufen für die einzelnen Reinigungsstufen
A) jede Reinigungsstufe über eigene, unabhängige Zufuhr- und Regelungsvorrichtungen für die in der Reinigungsstufe anzuwendenden Waschflüssigkeiten, Zusätze und/oder Betriebsparameter aufweist,
oder
B) einige, jedoch nicht alle Reinigungsstufen über gemeinsame Zufuhr- und Regelungsvorrichtungen für die in der Reinigungsstufe anzuwendenden Waschflüssigkeiten, Zusätze und/oder Betriebsparameter aufweist,
oder
C) alle Reinigungsstufen über gemeinsame Zufuhr- und Regelungsvorrichtungen für die in den Reinigungsstufen anzuwendenden Waschflüssigkeiten, Zusätze und/oder Betriebsparameter aufweisen.

14. Abluftwäscher (0) nach einem der vorhergehenden Ansprüche, **dadurch gekennzeichnet, dass** zwei Reinigungsstufen nacheinander angeordnet sind, wobei
1) die in Strömungsrichtung der Luft erste Reinigungsstufe für alkalischen und neutralen, vorzugsweise ungeregelten pH-Wert-Betrieb konfiguriert ist
und
2) die zweite Reinigungsstufe für sauren pH-Wert-Betrieb konfiguriert ist.

15. Abluftwäscher (0) nach einem der vorhergehenden Ansprüche, **dadurch gekennzeichnet, dass** die unten abgezogene Waschlösung ganz oder teilweise zur Aufgabestelle (11) im oberen Teil des Gehäuses geleitet wird, vorzugsweise mittels einer Pumpe.

16. Abluftwäscher (0) nach einem der vorhergehenden Ansprüche, **dadurch gekennzeichnet, dass** eine weitere Reinigungsstufe von mindestens einem Teilstrom der zuvor vorgereinigten Luft durchströmt wird.

17. Abluftwäscher (0) nach einem der vorhergehenden Ansprüche, **dadurch gekennzeichnet, dass** mindestens eine Reinigungsstufe durch Zugabe einer Mineralsäure, bevorzug Salpeter- oder Schwefelsäure, in ihrem pH-Wert eingestellt werden kann.

18. Abluftwäscher (0) nach einem der vorhergehenden Ansprüche, **dadurch gekennzeichnet, dass** er als Teil einer Anlage zur Herstellung von ammoniumnitrat- oder harnstoffhaltigem prilliertem oder granuliertem Produkt, vorzugsweise Ammoniumnitrat-Düngemittel, porösem Ammoniumnitrat, Kalkammonsalpeter, Ammonnitrat-Sulfat-Düngemittel (ASN) oder Harnstoffdünger konfiguriert ist.

19. Verwendung eines Abluftwäschers gemäß einem der Ansprüche 1 bis 18 zur Abgasreinigung bei der Herstellung von ammoniumnitrat-, ammoniumsulfat- oder harnstoffhaltigem prilliertem oder granuliertem Produkt, vorzugsweise Ammoniumnitrat-Düngemittel, porösem Ammoniumnitrat, Kalkammonsalpeter, Ammoniumsulfat-Düngemittel, Ammonnitrat-Sulfat-Düngemittel oder Harnstoffdünger.

## Claims

1. An exhaust air scrubber (0) for removing dust, abraded product and water-soluble constituents from process exhaust air comprising in one housing (0a)
I) at least one cleaning stage comprising
a) a droplet separator (1), preferably in the form of a knitted mesh or lamellar separator,
b) arranged therebelow at least one packing (2), preferably in the form of a random packing,
c) optionally between the droplet separator (1) and the packing (2) at least one scrubbing tray (9),
II) at least one inlet apparatus for process exhaust air (3) arranged in the lower portion of the housing, preferably below the at least one cleaning stage,
III) at least one withdrawal apparatus for scrubbing solution (4) which may also contain solids, preferably at the lower end of the housing (0a),
IV) at least one withdrawal conduit (8, 13) for the cleaned exhaust air
V) at least one feed conduit (11) for scrubbing solution in the upper portion of the housing, above the at least one cleaning stage,
**characterized in that**
- the withdrawal conduit (8,13) for the cleaned exhaust air
i) begins inside the housing (0a) above the at least one cleaning stage,
ii) is passed downward inside the housing (0a) and
iii) is passed out of the housing to the outside in the lower region of the housing (0a) below the cleaning stage(s).

2. The exhaust air scrubber (0) as claimed in claim 1, **characterized in that**
- at the lower end the housing (0a) narrows in the downward direction and is preferably conical and
- the at least one withdrawal apparatus for scrubbing solution (4) is arranged at the lower end of the housing (0a).

3. The exhaust air scrubber (0) as claimed in claim 2, **characterized in that** the at least one withdrawal apparatus for scrubbing solution (4) is arranged at the lowest point in the center of the housing narrowing and is optionally connected to at least one recirculation pump for scrubbing solution withdrawal.

4. The exhaust air scrubber (0) as claimed in any of the preceding claims, **characterized in that** the withdrawal conduit (8) is arranged in the middle of the housing (0a), preferably concentrically to the circular side walls of the housing (0a).

5. The exhaust air scrubber (0) as claimed in any of the preceding claims, **characterized in that** the withdrawal conduit (8) for the cleaned exhaust air is passed laterally outwards out of the housing in the lower portion of the housing (0a) below the cleaning stage(s).

6. The exhaust air scrubber (0) as claimed in any of the preceding claims, **characterized in that** the withdrawal conduit (8) inside the housing is simultaneously configured as an anchoring point for internal attachments, preferably including an anchoring point for the elements of the cleaning stage(s).

7. The exhaust air scrubber (0) as claimed in any of the preceding claims, **characterized in that** the withdrawal conduit (8) inside the housing is connected to at least one suction apparatus and/or at least one exhaust air blower optionally via additional conduits.

8. The exhaust air scrubber (0) as claimed in any of the preceding claims, **characterized in that** a portion of the scrubbing solution withdrawn at the bottom or another suitable process medium, for example the feed water or process condensate generated elsewhere, is injected into the conical lower portion of the housing (0a), preferably tangentially.

9. The exhaust air scrubber (0) as claimed in any of the preceding claims, **characterized in that** it comprises an apparatus for measuring physical parameters of material accumulating in the lower portion of the housing (0a), preferably comprising apparatuses for measuring the pH and the concentration of the scrubbing solution and the fill level in the exhaust air scrubber.

10. The exhaust air scrubber (0) as claimed in any of the preceding claims, **characterized in that** nozzles configured for spraying water onto the droplet separator (1) are attached upstream of the droplet separator (1).

11. The exhaust air scrubber (0) as claimed in any of the preceding claims, **characterized in that** at least one heat exchanger or heat exchanger package is installed downstream of the uppermost cleaning stage, preferably in the internal portion (13) of the air withdrawal conduit (8).

12. The exhaust air scrubber (0) as claimed in any of the preceding claims, **characterized in that** a manually or automatically controlled gas or air supplying means, preferably controlled on the basis of temperature or weather or visual parameters, is arranged downstream of the uppermost cleaning stage, preferably configured for introducing gas or air into the internal portion (13) of the exhaust air conduit (8).

13. The exhaust air scrubber (0) as claimed in any of the preceding claims, **characterized in that** in the case of a plurality of cleaning stages for the individual cleaning stages
A) each cleaning stage has its own independent feed and control apparatuses for the scrubbing liquids, additions and/or operating parameters to be used in the cleaning stage,
or
B) some but not all cleaning stages have common feed and control apparatuses for the scrubbing liquids, additions and/or operating parameters to be used in the cleaning stage,
or
C) all cleaning stages have common feed and control apparatuses for the scrubbing liquids, additions and/or operating parameters to be used in the cleaning stages.

14. The exhaust air scrubber (0) as claimed in any of the preceding claims, **characterized in that** two cleaning stages are arranged in series, wherein
1) the first cleaning stage in the flow direction of the air is configured for alkaline and neutral, preferably uncontrolled pH, operation
and
2) the second cleaning stage is configured for acidic pH operation.

15. The exhaust air scrubber (0) as claimed in any of the preceding claims, **characterized in that** the scrubbing solution withdrawn at the bottom is in whole or in part passed to the feed point (11) in the upper portion of the housing, preferably using a pump.

16. The exhaust air scrubber (0) as claimed in any of the preceding claims, **characterized in that** at least a substream of the previously pre-cleaned air passes through a further cleaning stage.

17. The exhaust air scrubber (0) as claimed in any of the preceding claims, **characterized in that** at least one cleaning stage may be pH-adjusted by addition of a mineral acid, preferably nitric or sulfuric acid.

18. The exhaust air scrubber (0) as claimed in any of the preceding claims, **characterized in that** it is configured as part of a plant for producing ammonium nitrate- or urea-containing prilled or granulated product, preferably ammonium nitrate fertilizer, porous ammonium nitrate, calcium ammonium nitrate, ammonium sulfate nitrate fertilizer (ASN) or urea fertilizer.

19. The use of an exhaust air scrubber as claimed in any of claims 1 to 18 for offgas cleaning in the production of ammonium nitrate-, ammonium sulfate- or urea-containing prilled or granulated product, preferably ammonium nitrate fertilizer, porous ammonium nitrate, calcium ammonium nitrate, ammonium sulfate fertilizer, ammonium sulfate nitrate fertilizer or urea fertilizer.

## Revendications

1. Un épurateur de l'air d'échappement (0) destiné à éliminer la poussière, les produits abrasés et les composants hydrosolubles de l'air d'échappement issu d'un processus, comprenant dans un boîtier (0a)
I) au moins un étage de nettoyage comprenant
a) un séparateur de gouttelettes (1), de préférence sous la forme d'un séparateur à mailles tricotées ou à lamelles,
b) au moins un garnissage (2) disposé en dessous, de préférence sous la forme d'un garnissage aléatoire,
c) éventuellement entre le séparateur de gouttelettes (1) et le garnissage (2), au moins un plateau de lavage (9),
II) au moins un dispositif d'entrée pour l'air d'échappement du processus (3) disposé dans la partie inférieure du boîtier, de préférence en dessous du ou des étages de nettoyage,
III) au moins un dispositif d'évacuation pour une solution de lavage (4) qui peut également contenir des solides, de préférence à l'extrémité inférieure du boîtier (0a),
IV) au moins un conduit d'évacuation (8, 13) pour l'air d'échappement épuré
V) au moins un conduit d'alimentation (11) pour la solution de lavage dans la partie supérieure du boîtier, au-dessus du ou des étages de nettoyage,
**caractérisé en ce que**
- le conduit d'évacuation (8, 13) pour l'air évacué épuré
i) commence à l'intérieur du boîtier (0a) au-dessus du ou des étages de nettoyage,
ii) est guidé vers le bas à l'intérieur du boîtier (0a) et
iii) est guidé hors du boîtier vers l'extérieur dans la partie inférieure du boîtier (0a) en dessous du ou des étages de nettoyage.

2. L'épurateur de l'air d'échappement (0) selon la revendication 1, **caractérisé en ce que**
- à l'extrémité inférieure, le boîtier (0a) se rétrécit vers le bas et est de préférence conique et
- le ou les dispositifs d'extraction de solution de lavage (4) sont disposés à l'extrémité inférieure du boîtier (0a).

3. L'épurateur de l'air d'échappement (0) selon la revendication 2, **caractérisé en ce que** le ou les dispositifs de prélèvement de solution de lavage (4) sont disposés au point le plus bas au centre du rétrécissement du boîtier et sont reliés en option à au moins une pompe de recirculation pour le prélèvement de la solution de lavage.

4. L'épurateur de l'air d'échappement (0) selon l'une quelconque des revendications précédentes, **caractérisé en ce que** le conduit d'évacuation (8) est disposé au milieu du boîtier (0a), de préférence de manière concentrique par rapport aux parois latérales circulaires du boîtier (0a).

5. L'épurateur de l'air d'échappement (0) selon l'une quelconque des revendications précédentes, **caractérisé en ce que** le conduit d'évacuation (8) pour l'air d'échappement épuré est guidé latéralement vers l'extérieur hors du boîtier dans la partie inférieure du boîtier (0a) en dessous du ou des étages de nettoyage.

6. L'épurateur de l'air d'échappement (0) selon l'une quelconque des revendications précédentes, **caractérisé en ce que** le conduit d'évacuation (8) à l'intérieur du boîtier est simultanément configuré comme un point d'ancrage pour des fixations internes, comprenant de préférence un point d'ancrage pour les éléments du ou des étages de nettoyage.

7. L'épurateur de l'air d'échappement (0) selon l'une quelconque des revendications précédentes, **caractérisé en ce que** le conduit d'évacuation (8) à l'intérieur du boîtier est relié à au moins un dispositif d'aspiration et/ou à au moins un ventilateur de l'air d'échappement, éventuellement via des conduits supplémentaires.

8. L'épurateur de l'air d'échappement (0) selon l'une quelconque des revendications précédentes, **caractérisé en ce qu'**une partie de la solution de lavage prélevée au fond ou un autre milieu de traitement approprié, par exemple l'eau d'alimentation ou le condensat de traitement généré ailleurs, est injectée dans la partie conique inférieure du boîtier (0a), de préférence tangentiellement.

9. L'épurateur de l'air d'échappement (0) selon l'une quelconque des revendications précédentes, **caractérisé en ce qu'**il comprend un appareil pour mesurer les paramètres physiques du matériau s'accumulant dans la partie inférieure du boîtier (0a), comprenant de préférence des appareils pour mesurer le pH et la concentration de la solution de lavage et le niveau de remplissage dans l'épurateur de l'air d'échappement.

10. L'épurateur de l'air d'échappement (0) selon l'une quelconque des revendications précédentes, **caractérisé en ce que** des buses configurées pour pulvériser de l'eau sur le séparateur de gouttelettes (1) sont fixées en amont du séparateur de gouttelettes (1).

11. L'épurateur de l'air d'échappement (0) selon l'une quelconque des revendications précédentes, **caractérisé en ce qu'**au moins un échangeur de chaleur ou un ensemble d'échangeurs de chaleur est installé en aval de l'étage de nettoyage le plus élevé, de préférence dans la partie interne (13) du conduit d'évacuation de l'air (8).

12. L'épurateur de l'air d'échappement (0) selon l'une quelconque des revendications précédentes, **caractérisé en ce qu'**un moyen d'alimentation en gaz ou en air commandé manuellement ou automatiquement, de préférence commandé en fonction de la température, des conditions météorologiques ou de paramètres visuels, est disposé en aval de l'étage de nettoyage le plus élevé, de préférence configuré pour introduire du gaz ou de l'air dans la partie interne (13) du conduit de l'air d'échappement (8).

13. L'épurateur de l'air d'échappement (0) selon l'une quelconque des revendications précédentes, **caractérisé en ce que**, dans le cas d'une pluralité d'étapes de nettoyage pour les étapes de nettoyage individuelles
A) chaque étape de nettoyage dispose de ses propres appareils d'alimentation et de commande indépendants pour les liquides de lavage, les additifs et/ou les paramètres de fonctionnement à utiliser dans l'étape de nettoyage,
ou
B) certaines étapes de nettoyage, mais pas toutes, disposent d'appareils d'alimentation et de commande communs pour les liquides de lavage, les additifs et/ou les paramètres de fonctionnement à utiliser dans l'étape de nettoyage,
ou
C) toutes les étapes de nettoyage disposent d'appareils d'alimentation et de commande communs pour les liquides de lavage, les additifs et/ou les paramètres de fonctionnement à utiliser dans les étapes de nettoyage.

14. L'épurateur de l'air d'échappement (0) selon l'une quelconque des revendications précédentes, **caractérisé en ce que** deux étapes de nettoyage sont disposées en série, dans lequel
1) la première étape de nettoyage dans le sens d'écoulement de l'air est configurée pour un fonctionnement alcalin et neutre, de préférence à pH non contrôlé
et
2) la deuxième étape de nettoyage est configurée pour fonctionner à un pH acide.

15. L'épurateur de l'air d'échappement (0) selon l'une quelconque des revendications précédentes, **caractérisé en ce que** la solution d'épuration retirée au fond est transmise en tout ou en partie au point d'alimentation (11) dans la partie supérieure du boîtier, de préférence à l'aide d'une pompe.

16. L'épurateur de l'air d'échappement (0) selon l'une quelconque des revendications précédentes, **caractérisé en ce qu'**au moins un sous-flux de l'air préalablement pré-épuré passe à travers une étape de nettoyage supplémentaire.

17. L'épurateur de l'air d'échappement (0) selon l'une quelconque des revendications précédentes, **caractérisé en ce qu'**au moins une étape de nettoyage peut être ajustée en pH par addition d'un acide minéral, de préférence de l'acide nitrique ou sulfurique.

18. L'épurateur de l'air d'échappement (0) selon l'une quelconque des revendications précédentes, **caractérisé en ce qu'**il est configuré comme partie d'une installation destinée à produire un produit granulé ou en granulés contenant du nitrate d'ammonium ou de l'urée, de préférence un engrais à base de nitrate d'ammonium, du nitrate d'ammonium poreux, du nitrate de calcium et d'ammonium, un engrais à base de nitrate de sulfate d'ammonium (ASN) ou un engrais à base d'urée.

19. Utilisation d'un épurateur de l'air d'échappement selon l'une quelconque des revendications 1 à 18 pour le nettoyage des gaz d'échappement dans la production de produits granulés ou en prills contenant du nitrate d'ammonium, du sulfate d'ammonium ou de l'urée, de préférence des engrais à base de nitrate d'ammonium, du nitrate d'ammonium poreux, du nitrate de calcium et d'ammonium, des engrais à base de sulfate d'ammonium, des engrais à base de nitrate de sulfate d'ammonium ou des engrais à base d'urée.
